# EUROPEAN PATENT APPLICATION

(11) **EP 1 139 601 A2**
(43) Date of publication of application: **04.10.2001**
(21) Application number: 01106469.8
(22) Date of filing: 23.03.2001
(51) Int. Cl.: H04L 7/04, H04Q 7/34, H04B 7/26

(54) **Receiving circuit of DSRC radio**

(30) Priority: 27.03.2000 JP 2000087525
(71) Applicant: NEC CORPORATION, Tokyo (JP)
(72) Inventor: Yamashita, Hiroshi, NEC Corporation, Minato-ku, Tokyo (JP)
(74) Representative: VOSSIUS & PARTNER

(57) **Abstract**

A receiving circuit of a DSRC radio includes plural sequences of a split phase decoding unit, a clock regeneration unit, and a UW detection unit for protection against the distortion of a base band signal detected and adjusted according to a received signal S1 fluctuating at random. In each sequence, a received signal is received with a different phase, and a sequence indicating a better detection result of a UW signal is determined. Regenerated data from a signal received at the sequence indicating a better UW detection result is selected. A control unit controls regenerated clocks to have different phases. A data analysis unit analyzes various data using selected regenerated data.

## Description

The present invention relates to a receiving circuit of a DSRC (dedicated short range communication) radio applied to an intelligent transport system ITS, and more specifically to a receiving circuit of a DSRC radio for improving reception performance when a signal is distorted by fluctuation of the input level of a received signal.

The DSRC communications system is a road-vehicle communications system for establishing radio communications in a small area between a roadside radio (base station) provided on the roadside and an onboard radio installed on a vehicle. In the DSRC communications system, a DSRC radio converts data into an NRZ (no return to zero) signal for split phase coding. Then, an ASK (amplitude shift keying) modulating process is performed, and the result is radio-transmitted through a 5.8 [GHz] band carrier. A split phase code is a binary code, a direct current balance is maintained in each of data bits, and a change point necessarily exists in each of data bits. The method for split-phase-coding an NRZ signal is disclosed by, for example, Japanese Patent Laid-Open No. 63-20919. The method for decoding a split-phase code into an NRZ signal is disclosed by, for example, Japanese Patent Laid-Open No. 2-72719.

First, a configuration of the data transmitted by the DSRC radio to which the present invention is applied will be described below.

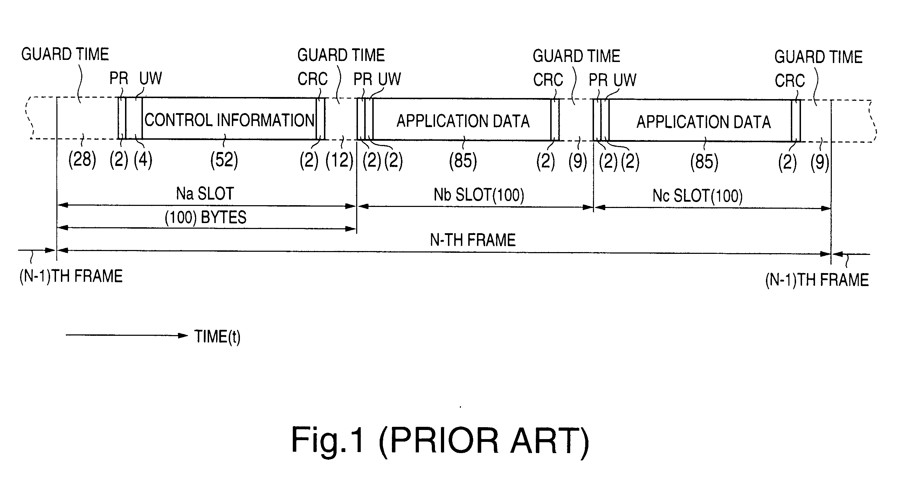

Fig. 1 shows an example of the configuration of the frame of a signal received by the receiving circuit of the DSRC radio according to the present invention. By referring to Fig. 1, a signal transmitted by the roadside radio or the onboard DSRC radio forms a frame containing three slots, that is, Na, Nb, and Nc. This frame is referred to as a frame set. Fig. 1 shows the passage of time in the horizontal direction (the 't' shown in Fig. 1 indicates a time axis). Frame sets are sequentially transmitted. Fig. 1 shows the detailed configuration of a frame set having the frame number of N. The Na slot includes a guard time (28 bytes), a PR (preamble) signal (2 bytes), a UW (unique word) signal (4 bytes), data (52 bytes), a CRC (cyclic redundancy check) code (2 bytes), and a guard time (12 bytes) (a total of 100 bytes). The PR signal is a synchronization detection signal. The UW signal is a frame synchronization detection signal, and includes a unique code sequence. The data is a signal containing control information for establishing communications between a roadside radio and a onboard DSRC radio.

Each of the Nb and Nc slots includes a PR (preamble) signal (2 bytes), a UW signal (2 bytes), data (85 bytes), a CRC signal (2 bytes), and a guard time (9 bytes) (a total of 100 bytes). The data of the Nb and Nc slots is referred to as application data. The data transmitted by the onboard radio contains information for use by an automatic toll system recognizing a vehicle passing through a toll road. The data transmitted by the roadside radio contains, for example, traffic information provided by a traffic information system.

The data of Na, Nb, and Nc slots are normally different among frame sets. No signals exist in the guard time.

The signal configuration of the frame set shown in Fig. 1 is defined by 'Standard Specification of Automatic Toll System (Association of Radio Industries and Businesses) P41 - P61 (ARIB STD-T55, first and second editions in December, 1999). According to the definition, time length of each bit of a transmission signal is 1/1024 [µS]. Since each 1-byte data forming part of the frame set shown in Fig. 1 is formed by 8 bits, the time length of one frame set is about 2.34 [mS] (8 × 300/1024 [µS]).

Described below is a conventional receiving circuit of a DSRC radio.

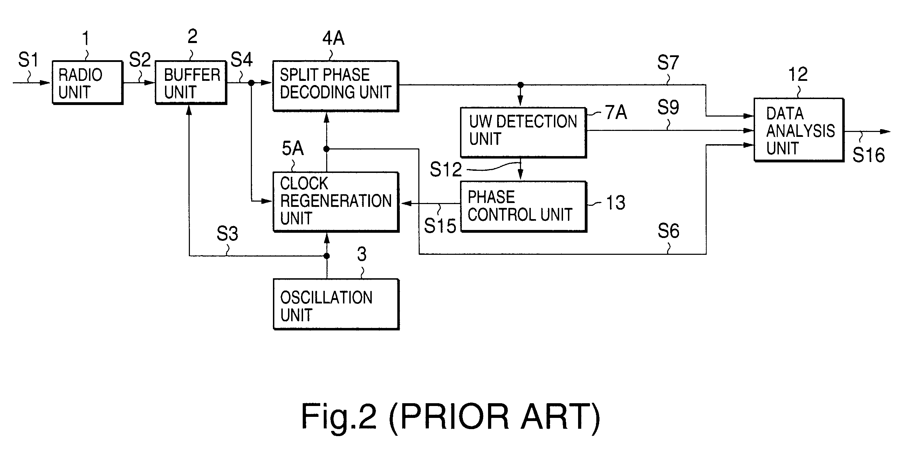

Fig. 2 is a block diagram showing an example of the receiving circuit of the DSRC radio according to the conventional technology. An onboard DSRC radio receives a signal of 5.8 [GHz] transmitted by a roadside radio.

By referring to Fig. 2, a radio unit 1 of a receiving circuit of the onboard DSRC radio according to the conventional technology ASK-detects a received signal S1, and outputs an ASK detection signal S2. The radio unit 1 is configured using a diode detector, etc. The ASK detection signal S2 is a split-phase-coded base band signal. The ASK detection signal S2 is provided for a buffer unit 2. The buffer unit 2 performs a re-timing process on the ASK detection signal S2 using a clock signal S3 provided by an oscillation unit 3 and outputs the result. An output signal S4 from the buffer unit 2 is provided for a split phase decoding unit 4A and a clock regeneration unit 5A.

The clock regeneration unit 5A detects synchronization from a PR signal of the Na slot contained in the base band signal S4, and outputs a regenerated clock signal S6. The split phase decoding unit 4A split-phase-decodes the S4 from the UW to the CRC according to a regenerated clock signal S6, thereby outputting regenerated data S7 (also referred to as a received signal sequence or a received data sequence) in the NRZ format. The regenerated data S7 is provided for a UW (unique word) detection unit 7A and a data analysis unit 12.

The UW detection unit 7A detects a UW signal from the regenerated data S7. The UW detection unit 7A outputs a UW detection timing signal S9 at a timing of the final bit of the UW signal. The UW detection timing signal S9 is provided for a data analysis unit 12.

The UW detection unit 7A stored a predetermined UW signal in its ROM, etc. Then, the UW signal stored in the ROM, etc. is compared with the regenerated data S7 to detect the UW signal contained in the regenerated data S7. To detect the UW signal contained in the regenerated data S7, for example, a shift register, etc. is used. The regenerated data S7 is loaded bit by bit in the shift register, and, while being shifted, compared sequentially with the UW signal stored in the ROM, thereby verifying a matching result. The UW detection unit 7A transmits the UW detection timing signal S9 to the data analysis unit 12, and notifies a phase control unit 13 of a UW detection result S12. The UW detection result S12 indicates the detected phase of the UW signal using the detection result of the UW signal from the regenerated data S7. The phase control unit 13 outputs a phase control signal S15 to the clock regeneration unit 5A based on the UW detection result S12.

The clock regeneration unit 5A controls the phase of the regenerated clock signal S6 transmitted to the split phase decoding unit 4A according to the phase control signal S15, and controls the feedback for the optimum phase such that an acceptable detection phase of the UW signal from the regenerated data S7 can be obtained. The data analysis unit 12 specifies the heading bit of the DATA of the Na slot based on the UW detection timing signal S9 of the UW signal as a trigger. Then, a data error is checked according to the CRC signal added to the end of the subsequent regenerated data S7. If there are no errors, the data is analyzed, and the resultant analyzed data S16 is output for the subsequent processes. At the stages subsequent to the data analysis unit 12, for example, a display unit, an appliance control unit, etc. are provided for display and notification of information.

The DSRC communications system is a road-vehicle communications system in which a base station radio provided at a roadside communicates with an onboard radio installed in a vehicle in a small communications area. In the radio communications between the base station and a moving vehicle, the transmission condition of a radio transmission line incessantly changes. Therefore, the base band signal S4 detected by the receiving circuit of the DSRC radio contains random distorted waveforms caused by the fluctuation of input levels, multipath fading, etc. It further contains distorted waveforms caused by the detection characteristics of the radio unit 1.

In the receiving circuit of the DSRC radio according to the conventional technology described above by referring to Fig. 2, the above mentioned distorted waveforms in the output of the buffer unit 2 (a base band signal S4) affect the regenerated clock signal S6 generated by the clock regeneration unit 5A. The regenerated clock signal S6 suddenly fluctuates in phase, thereby causing an erroneous operation of the split phase decoding unit 4A. For example, when an error occurs in the decoding process in the N-th frame shown in Fig. 1, the UW detection result S12 from the UW detection unit 7A also deteriorates. The phase control unit 13 controls the feedback of the phase of the regenerated clock signal S6 of the clock regeneration unit 5A based on the UW detection result S12. However, when a decoding error occurs, the feedback control cannot converge in a frame set. Therefore, the feedback control converges at the (N + 1)th frame at earliest, and the regenerated data S7 in the N-th frame set is erroneous. Therefore, in the communications system in which it is necessary to terminate the radio communications in a short period such as 2.34 mS per frame set in a small communications area such as the DSRC communications system, the receiving circuit shown in Fig. 2 is not effective. If waveforms are frequently distorted in the above mentioned data sequence in a small communications area, then a vehicle can pass through a possible communications area before the road-vehicle communications normally terminate.

Therefore, the present invention has been developed to solve the problems with the conventional receiving circuit of the DSRC radio, and aims at providing a receiving circuit of the DSRC radio capable of performing high quality road-vehicle communications by improving the protection against a received data error caused by the distortion of a waveform of a detected base band signal.

The receiving circuit of the DSRC radio according to the present invention includes multiple sequences of split phase decoding units, clock regeneration units, and UW detection units to reduce the distortion of received and detected data sequences (above mentioned data) which fluctuate at random by the multipath fading, the level fluctuation, etc. of a received signal. Then, by using the regenerated clock and data indicating acceptable detection results of the UW signal, the protection against reception data error can be improved. As a result, the UW signal can be detected without fail, and the quality of the DSRC communications can be successfully improved.

The above and other objects, features, and advantages of the present invention will become more apparent from the following detailed description when taken in conjunction with the accompanying drawings wherein:
Fig. 1 shows an example of the configuration of the frame of a signal received by a receiving circuit of a DSRC radio according to the present invention;
Fig. 2 is a block diagram showing an example of the receiving circuit of the DSRC radio according to the conventional technology;
Fig. 3 is a block diagram showing a first embodiment of the receiving circuit of the DSRC radio according to the present invention;
Fig. 4 is a block diagram showing a second embodiment of the receiving circuit of the DSRC radio according to the present invention;

The present invention is described below by referring to the attached drawings.

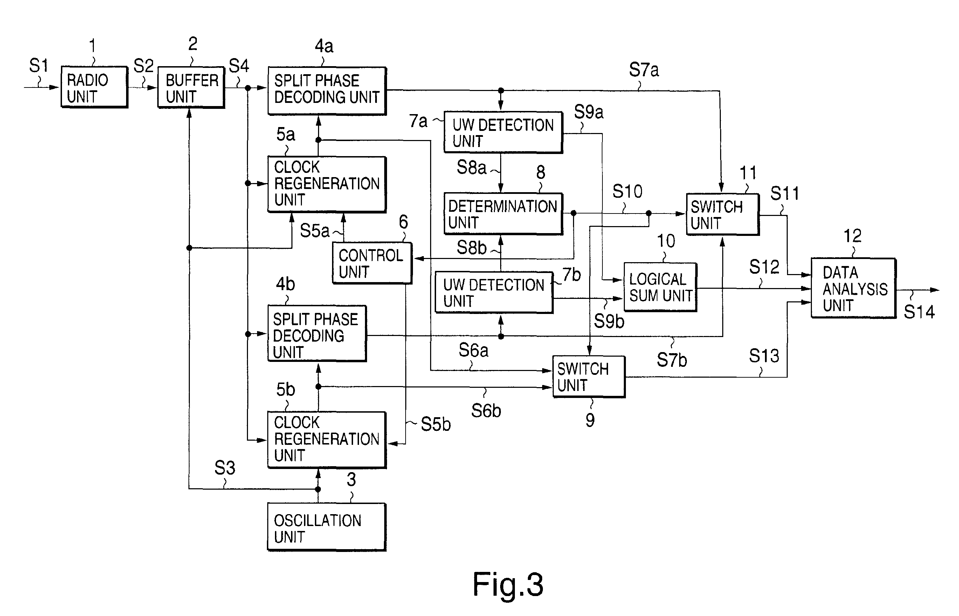

Fig. 3 is a block diagram of a desirable embodiment of a receiving circuit of a DSRC radio according to the present invention.

By referring to Fig. 3, the receiving circuit of the DSRC radio is obtained by providing plural sequences of the buffer unit 2 through the data analysis unit 12 in the receiving circuit of the DSRC radio shown in Fig. 2. That is, the split phase decoding unit 4A, the clock regeneration unit 5A, and the UW detection unit 7A shown in Fig. 2 are provided in plural sequences in Fig. 3 (two sequences in Fig. 3) of split phase decoding units 4a and 4b, clock regeneration units 5a and 5b, and UW detection units 7a and 7b. A determination unit 8 shown in Fig. 3 compares detection results of UW detection results S8a and S8b, determines a better decoding result, and controls switch units 9 and 11. The switch unit 9 switches the regenerated clock signals S6a and S6b, and a selected signal S13 is provided for the data analysis unit 12. The switch unit 11 switches the regenerated data S7a and S7b, and a selected signal S11 is provided for the data analysis unit 12. Therefore, the receiving circuit of the DSRC radio shown in Fig. 3 further comprises a control unit 6, the determination unit 8, the switch units 9 and 11, and a logical sum unit 10 in addition to the above mentioned components. The components having the same names and different reference numerals shown in Fig. 3 and Fig. 2 are almost the same in basic operations, but different in input or output signals. Furthermore, the components having the suffix a are arranged in the first sequence while the components having the suffix b are arranged in the second sequence.

Then, the operations of the receiving circuit of the DSRC radio according to the present invention are described below by referring to the attached drawings.

By referring to Fig. 3, the transmission signal (radio signal) of 5.8 GHz band transmitted from the roadside radio reaches the receiving circuit of the onboard DSRC radio through a radio transmission line, and is provided for the radio unit 1 as a received signal S1. The radio unit 1 ASK-detects the received signal S1, and generates the ASK detection signal S2. The ASK detection signal S2 is a split-phase-coded signal, and has the frame configuration shown in Fig. 1. The ASK detection signal S2 is provided for the buffer unit 2.

The buffer unit 2 performs a re-timing process on the ASK detection signal S2 using a clock S3 provided by the oscillation unit 3, and provides the base band signal S4 synchronized by the clock S3 for the split phase decoding units 4a and 4b, and the clock regeneration unit 5a and 5b in the two sequences. The clock S3 is also provided for the clock regeneration unit 5a and 5b.

The clock regeneration units 5a and 5b regenerate a reception clock by referring to the PR signal of the Na slot in the base band signal S4, and outputs the regenerated clock signals S6a and S6b. The phases of the regenerated clock signals S6a and S6b are optionally controlled for different phases by the control unit 6 according to the regenerated clock signals S6a and S6b provided for the clock regeneration units 5a and 5b. The clock regeneration units 5a and 5b can be configured such that the phases of the regenerated clock signals S6a and S6b can be easily controlled by providing an oversampling circuit, etc. It is desired that the phase difference between the regenerated clock signals S6a and S6b is set to π/4 to π/2 approximately. The generated regenerated clock signals S6a and S6b are provided for the split phase decoding units 4a and 4b and switch unit 9 respectively.

The split phase decoding units 4a and 4b decode the base band signal S4 from each UW signal to a CRC signal into the regenerated data S7a and S7b in the NRZ format based on the regenerated clock signals S6a and S6b. The regenerated data S7a and S7b are provided for the UW detection units 7a and 7b and the switch unit 11.

The UW detection units 7a and 7b detect a UW signal from the regenerated data S7a and S7b. The UW detection unit 7A stores a predetermined UW signal in its ROM, etc. By comparing the UW signal stored in the ROM, etc. with the regenerated data S7, the UW detection unit 7A detects the UW signal contained in the regenerated data S7. For example, a shift register, etc. is used to detect the UW signal contained in the regenerated data S7. The regenerated data S7 is loaded bit by bit into the shift register, and, while being shifted, it is sequentially compared with the UW signal stored in the ROM, thereby verifying a matching result.

When the UW detection units 7a and 7b detect a UW signal, they transmit the UW detection results S8a and S8b to the determination unit 8. When the UW detection units 7a and 7b correctly detect UW signals, they transmit the UW detection timing signals S9a and S9b of the UW signals to the logical sum unit 10 at the timing of the final bit of the UW signal detection results S8a and S8b.

The determination unit 8 compares the UW detection result S8a from the UW detection unit 7a with the UW detection result S8b from the UW detection unit 7b. The comparison is made to determine a higher matching probability of the UW signals stored in the UW detection units 7a and 7b with the S7a and S7B. The determination unit 8 outputs a determination result S10 to the switch unit 9 and the switch unit 11, and notifies the control unit 6 of the result. The control unit 6 adjusts and controls at least one of the transmission phases set in the regenerated clock signals S6a and S6b output by the clock regeneration units 5a and 5b, and controls the feedback such that the optimum determination result S10 can be obtained. By this feedback control function, the receiving circuit according to the present invention can dynamically controls the phase of the regenerated clocks S6a and S6b even at the initial acquisition.

The switch unit 9 selects a regenerated clock signal S6 (S6a or S6b) of the path determined to have a better UW signal detection result. The switch unit 11 selects a regenerated data S7 (S7a or S7b) of the path determined to have a better UW signal detection result. The selected regenerated clock S13 and the regenerated data S11 are provided for the data analysis unit 12.

The logical sum unit 10 obtains a logical sum of the UW detection timing signals S9a and S9b from the UW detection units 7a and 7b, and transmits the UW detection result S12 for the data analysis unit 12. Since the phase of the regenerated data S7a and S7b generated by the split phase decoding units 4a and 4b are different from each other, one of the UW detection units 7a and 7b normally detects the UW signal correctly, and outputs the UW detection timing signal S9.

The data analysis unit 12 specifies the heading bit of the data unit of each frame (for example, Na, Nb, and Nc slots) shown in Fig . 1 using the detection timing signal S12 indicating a better UW signal detection result as a trigger, and analyzes the subsequent data according to the regenerated clock S13 as a clock. Furthermore, since a CRC (error detection) code is added to the end of the above mentioned data, the data analysis unit 12 verifies a data error using the CRC code. When there is no data error, the data analysis unit 12 determines that the obtained analysis result is valid, transmits the control information based on the analysis result and the information based on the application data according to the data other than the control information to the display unit at the subsequent state described above in the DESCRIPTION OF RELATED ART, the appliance control unit, etc. to perform an appropriate process such as a displaying process, a notifying process, or a tall collecting process using an IC card.

According to the embodiment shown in Fig. 3, the receiving circuit of the DSRC radio is provided on the vehicle side, but it is obvious that the receiving circuit can be provided on the roadside.

In the embodiment shown in Fig. 3, the circuit for regenerating regenerated data (S7) from the base band signal S4 is configured as a two sequence system, but the regeneration circuit can also be configured as a multi-sequence system containing three or more sequences. In this case, since the phase of the regenerated clock signal S6 provided for the split phase decoding unit 4A can be variable, a UW signal can be provided with higher probability.

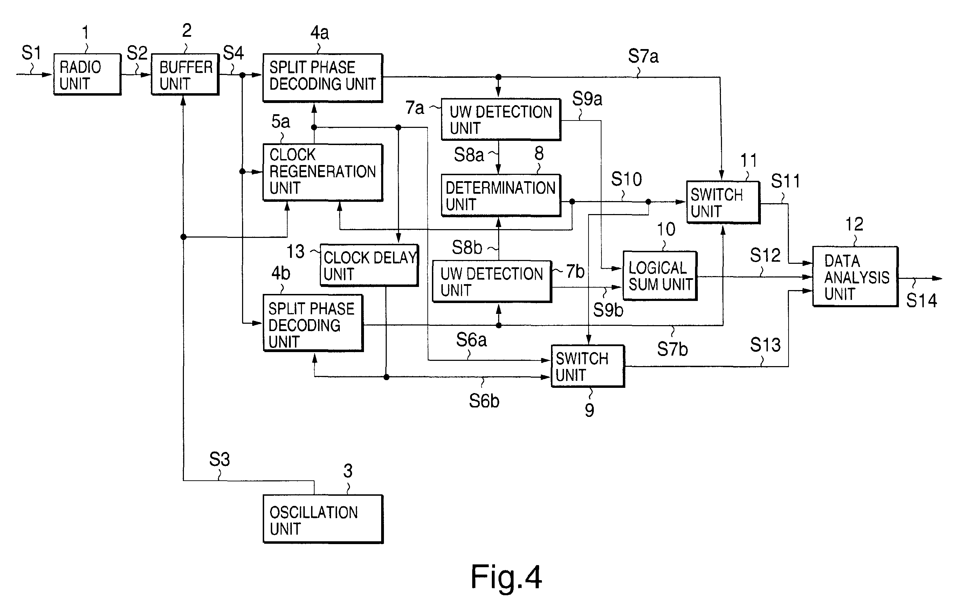

Furthermore, as the second embodiment, a signal delay circuit can be provided for the output circuit of one of the clock regeneration units 5a and 5b with the control unit 6 omitted to make different phases between the regenerated clock S6a and S6b. Fig. 4 shows the configuration of the receiving circuit according to the present invention with the above mentioned configuration. The configuration shown in Fig. 4 is different from that shown in Fig. 3 in that the clock delay unit 13 replaces the control unit 6 and the clock regeneration unit 5b. In this connection, an output signal S10 of the determination unit 8 is directly provided for the clock regeneration unit 5a. The clock regeneration unit 5a determines the phase of the regenerated clock signal S6a based on the S10. The clock delay unit 13 input the regenerated clock signal S6a, delays it by a predetermined phase, and outputs the regenerated clock signal S6b. According to the embodiment shown in Fig. 4, the regenerated clock signal S6b is provided for the split phase decoding unit 4b and the switch unit 9. With the configuration, the regenerated clock signals S6a and S6b having a predetermined relationship with a simpler configuration are generated according to the second embodiment.

As described above, in the receiving circuit of the DSRC radio according to the present invention, the split phase decoding unit, the clock regeneration unit, and the UW detection unit are designed with multiple sequences, a regenerated clock and regenerated data in a sequence indicating a better UW signal detection result are adopted, and the received data regenerated with a better regenerated clock phase is used, thereby improving the protection against received data error. Furthermore, the UW signal can be quickly detected, and high-quality DSRC communications can be realized.

As a result, high-quality and high-reliability radio communications can be provided for various services relating to the above mentioned ITS.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. A receiving circuit of a DSRC radio, comprising:
a radio unit for receiving a radio signal having a frame configuration containing a unique word (UW), and distributing the signal to a plurality of subsequent systems;
a plurality of UW detection units for detecting a UW signal from an output signal from said radio unit;
a determination unit for receiving a UW detection signal output by said UW detection units, determining a UW detection unit indicating a better detection state, and outputting a determination signal for identifying a UW detection unit indicating a better detection state; and
a switch unit for selecting and outputting an output signal of said plurality of UW detection units according to the determination signal.

2. A receiving circuit of a DSRC radio, comprising:
a radio unit for receiving a radio signal transmitted after split-phase-coding and ASK-modulating a signal comprising an NRZ code sequence forming a frame in the order of a PR signal, UW signal, data, and a CRC signal, ASK-detecting the signal, and generating an ASK detection signal;
a buffer unit for performing a re-timing process on said ASK detection signal using a clock provided by an oscillation unit, and generating a base band signal;
a first and a second split phase decoding unit for decoding said base band signal into an NRZ signal;
a first and a second clock regeneration unit for regenerating a clock of the base band signal from the base band signal and a clock output by said oscillation unit, generating a first and a second regenerated clock signal having different phases, and providing the signals as clocks of said first and second split phase decoding units;
a first and a second UW detection unit for detecting the UW signal from the NRZ signal output by said first and second split phase decoding units;
a determination unit for comparing the UW signals detected by said first and second UW detection units, and determining the UW signal indicating a better detection result;
a logical sum unit for obtaining a logical sum of a detected timing signal of the UW signals detected by said first and second UW detection units;
a data analysis unit for analyzing the data using the selected UW signal, the data, the CRC signal, and the detected timing signal; and
a control unit for controlling said first and second clock regeneration units according to an output signal of said determination unit such that phases of the first and second regenerated clocks can be different from each other.

3. The circuit according to claim 2, wherein
said control unit changes a phase of at least one of the clocks regenerated by controlling said first and second clock regeneration units based on a determination result of the UW signal detection result determined by said determination unit.
